# FASCICULE DE BREVET EUROPEEN

(11) **EP 1 418 415 B1**
(45) Date de publication et mention de la délivrance du brevet: **07.09.2005**
(21) Numéro de dépôt: 03356163.0
(22) Date de dépôt: 21.10.2003
(51) Int. Cl.: G01N 11/02, G01F 11/02, B65D 47/24

(54) **Doseur pour liquide contenu dans un récipient**
Dosierapparat für Flüssigkeit in einem Flüssigkeitsbehälter
Dosing apparatus for liquid contained in a vessel

(30) Priorité: 05.11.2002 FR 0213829
(43) Date de publication de la demande: 12.05.2004
(73) Titulaire: ROVIP, 01250 Chavannes sur Suran (FR)
(72) Inventeur: Vimont, Christian, 01370 Treffort (FR)
(74) Mandataire: Bratel, Gérard

(56) Documents cités:
- EP-A- 0 763 721
- FR-A- 2 595 665
- FR-A- 2 729 925

## Description

La présente invention concerne, de façon générale, le dosage des produits liquides. Cette invention se rapporte, plus particulièrement, à un dispositif doseur pour un liquide contenu dans un récipient, tel qu'un flacon, le dispositif s'adaptant sur le goulot ou l'ouverture du récipient contenant le liquide à doser. Ce dispositif doseur s'applique, notamment mais non exclusivement, au dosage de liquides dans le domaine médical et pharmaceutique, où des doses précises doivent être distribuées, par exemple dans le cadre d'un traitement médical exigeant le respect de prescriptions bien précises.

Traditionnellement, le dosage de liquides, notamment dans le domaine médical et pharmaceutique, est effectué au moyen de pipettes de dosage. Il s'agit d'accessoires indépendants des récipients contenant les liquides à doser, et le maniement de ces instruments reste relativement délicat, en particulier pour des utilisateurs non exercés.

La présente invention vise à éviter ces inconvénients, en fournissant un dispositif de dosage lié au récipient qui contient le liquide à doser, et permettant de doser ce liquide de manière précise, en quelques gestes manuels simples. De plus, l'invention propose un dispositif qui, si cela est souhaité, permet un réglage simple de la dose de liquide isolée à chaque utilisation.

A cet effet, l'invention a pour objet un doseur pour liquide contenu dans un récipient, qui se compose essentiellement, d'une part, d'une capsule s'adaptant sur le goulot ou l'ouverture d'un récipient, la capsule étant pourvue d'une ouverture avec clapet d'aspiration du genre membrane, et d'autre part, d'une culasse montée coulissante axialement autour de la capsule, de manière à décrire une course prédéfinie ou présélectionnée, la culasse coiffant la capsule et étant pourvue d'une ouverture avec clapet d'évacuation du genre membrane, une chambre de dosage de volume modifiable, communiquant par le clapet d'aspiration avec l'intérieur du récipient, et par le clapet d'évacuation avec l'extérieur, étant ainsi formée entre une partie de la capsule et une partie de la culasse, de manière à permettre, par un retournement du récipient et un déplacement alternatif de la culasse, d'isoler puis de verser une dose de liquide, correspondant et la variation de volume de la chambre de dosage engendrée par la course de la culasse.

Ainsi, ce doseur s'utilise en renversant le récipient, puis en exerçant une traction manuelle sur la culasse de manière à former et à remplir de liquide la chambre de dosage, et enfin en repoussant cette culasse de manière à verser la quantité de liquide précédemment entrée dans la chambre de dosage, l'intervention des deux clapets assurant le fonctionnement voulu.

Dans une forme de réalisation préférée de ce doseur, la capsule possède un corps cylindrique adaptable sur le goulot ou l'ouverture du récipient, et une protubérance avec ouverture supérieure munie du clapet d'aspiration du genre membrane, tandis que la culasse possède un corps cylindrique monté de façon coaxiale autour du corps de la capsule, avec possibilité de coulissement, et une protubérance avec ouverture supérieure munie du clapet d'évacuation du genre membrane, la chambre de dosage étant formée entre la protubérance de la capsule et la protubérance de la culasse.

Le corps cylindrique de la capsule peut être muni intérieurement d'un taraudage, prévu pour être vissé sur un filetage extérieur du goulot d'un récipient, le doseur étant ainsi monté sur le récipient à la manière d'un bouchon vissé.

La protubérance de la culasse peut recevoir une tête de culasse qui surmonte le clapet d'évacuation du genre membrane pour le protéger, et qui forme un orifice de sortie pour le liquide dosé.

Les clapets d'aspiration et d'évacuation sont avantageusement constitués par des membranes en forme de disque souple, fixées chacune par leur centre dans l'ouverture correspondante de la capsule ou de la culasse.

De préférence, le doseur objet de l'invention comprend encore des moyens de sélection et de limitation de la course de translation de la culasse relativement à la capsule, de manière à ajuster la variation de volume de la chambre de dosage et à réaliser ainsi un réglage de la dose de liquide distribuée à chaque utilisation du doseur. Dans un mode particulier d'exécution, ces moyens comprennent, en combinaison :
- un montage non seulement coulissant, mais aussi rotatif, de la culasse autour de la capsule,
- une série de gorges orientées axialement, réparties sur la périphérie du corps de la capsule, les gorges possédant toutes des longueurs distinctes, par exemple croissantes, et
- un bossage formé sur le corps de la culasse et prévu pour coopérer avec l'une quelconque des gorges de la capsule,
la rotation de la capsule permettant d'amener celle-ci dans une position angulaire indexée sélectionnable, son bossage étant engagé dans une gorge de longueur choisie, limitant la course de translation de la culasse en correspondance avec la dose de liquide souhaitée.

Ainsi, le doseur pour liquide, objet de l'invention, peut être pourvu d'un système simple et précis permettant la sélection du volume de liquide dosé et distribué, notamment pour les applications dans lesquelles il est important de pouvoir ajuster la dose, par exemple dans les applications médicales. Cette sélection d'une dose particulière, parmi plusieurs doses possibles, est facilitée en prévoyant que la culasse comporte un marquage pour repérer les positions angulaires sélectionnables de cette culasse correspondant aux différents volumes de liquide dosables.

L'invention sera mieux comprise à l'aide de la description qui suit, en référence au dessin schématique annexé représentant, à titre d'exemple, une forme d'exécution de ce doseur pour liquide contenu dans un récipient :
Figure 1 est une vue en perspective éclatée d'un doseur conforme à la présente invention ;
Figure 2 est une vue en perspective, et avec coupe partielle, montrant le doseur de la figure 1 en place sur le goulot d'un récipient ;
Figure 3 est une vue en coupe passant par l'axe central du doseur, dans sa position initiale ;
Figure 4 est une vue similaire à la figure 3, montrant une position particulière de réglage de la dose désirée ;
Figure 5 et 6 sont des vues en coupe similaires aux précédentes, illustrant des phases de l'utilisation de ce doseur.

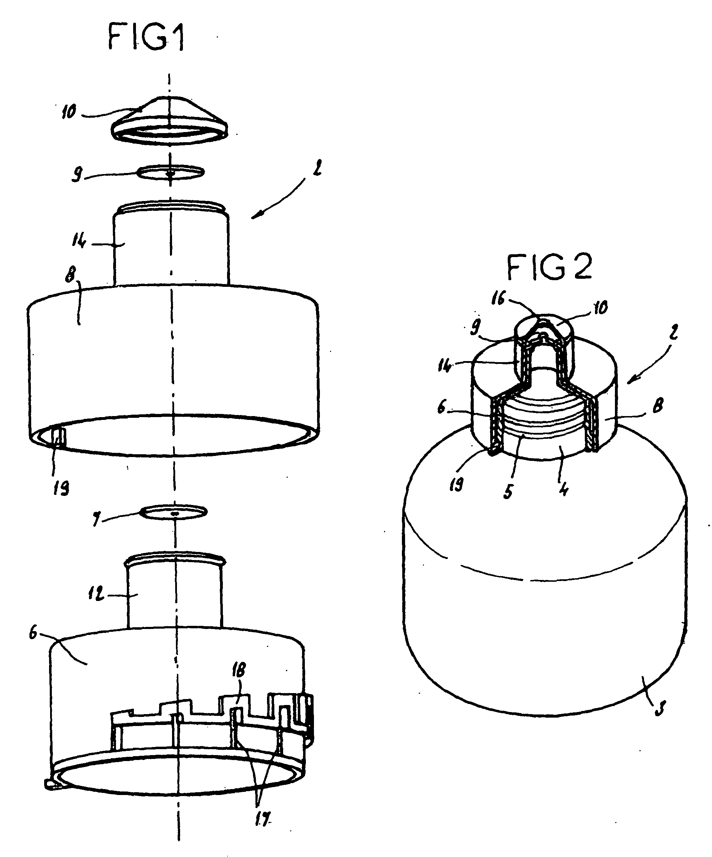

En se référant d'abord aux figures 1 et 2, le doseur objet de l'invention est désigné dans son ensemble par le repère 2. Ce doseur 2 est prévu pour être adapté, en particulier par vissage, sur un récipient 3 qui contient un liquide à doser. Il s'agit, par exemple, d'un flacon 3 en verre ou en matière plastique, avec un goulot 4 qui comporte extérieurement un filetage 5.

Le doseur se compose de cinq éléments, représentés séparés sur la figure 1, qui sont : une capsule 6, une membrane d'aspiration 7, une culasse 8, une membrane d'évacuation 9 et une tête de culasse 10.

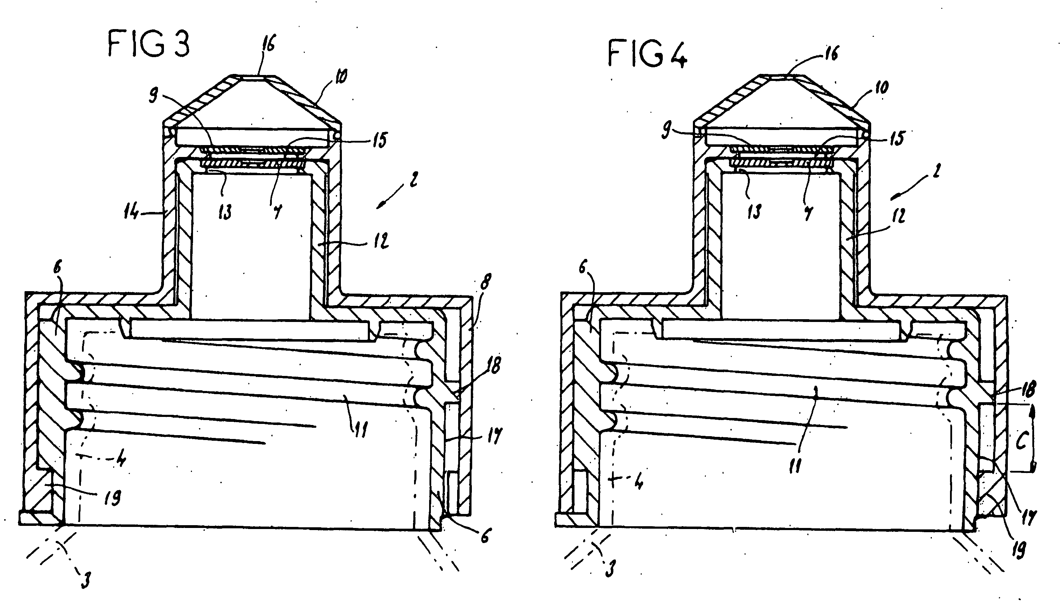

La capsule 6, réalisée par exemple en polypropylène, possède un corps cylindrique muni intérieurement d'un taraudage 11, prévu pour être vissé sur le filetage extérieur 5 du goulot 4 du flacon 2. Cette capsule 6 possède aussi, en son centre, une protubérance cylindrique 12 avec une ouverture circulaire supérieure 13 (voir aussi la figure 3).

La membrane d'aspiration 7, réalisée en thermoplastique élastomère ou en caoutchouc, est montée sur la protubérance 12 de la capsule 6 ; plus particulièrement, cette membrane d'aspiration 7 est fixée par encliquetage ou bouterollage, en son centre, dans l'ouverture circulaire 13 de la protubérance 12.

La culasse 8, réalisée en polypropylène ou en polyéthylène, possède une forme correspondant globalement à celle de la capsule 6, et est montée de façon coaxiale autour de ladite capsule 6, avec possibilité de translation et de rotation. Le corps cylindrique de la culasse 8 est, lui aussi, surmonté d'une protubérance centrale cylindrique 14, avec une ouverture circulaire supérieure 15.

La membrane d'évacuation 9, réalisée en thermoplastique élastomère ou en caoutchouc, est montée sur la protubérance 14 de la culasse 8 ; plus particulièrement, cette membrane d'évacuation 9 est fixée par encliquetage ou bouterollage, en son centre, dans l'ouverture circulaire 15 de la protubérance 14.

La tête de culasse 10 est une petite pièce tronconique évasée, réalisée par exemple en polypropylène, qui est encliquetée au sommet de la protubérance 14 de la culasse 8, de manière à surmonter et protéger la membrane d'évacuation 9. Cette tête de culasse 10 forme un orifice central 16, pour la sortie du liquide dosé.

La culasse 8 étant montée coulissante axialement autour de la capsule 6, le dispositif comprend encore des moyens de sélection et de limitation de la course de translation de la culasse 8 relativement à la capsule 6.

Ces moyens comprennent, sur l'extérieur du corps de la capsule 6 (voir au bas de la figure 1), une série de gorges 17, situées dans des positions angulaires régulièrement espacées. Les différentes gorges 17 sont orientées axialement ; elles partent toutes de la base du corps de la capsule 6, mais possèdent des longueurs progressivement croissantes. Une nervure 18, de forme crénelée, s'étend périphériquement en passant sur les sommets "étagés" des gorges 17 successives.

Lesdits moyens comprennent encore, sur le corps de la culasse 8, un bossage intérieur 19 prévu pour coopérer avec l'une quelconque des gorges 17 de la capsule 6.

La figure 3 représente le doseur 2 dans sa position initiale, le bossage 19 de la culasse 8 étant engagé dans la première gorge 17, c'est-à-dire la gorge 17 la plus courte, de la capsule 6.

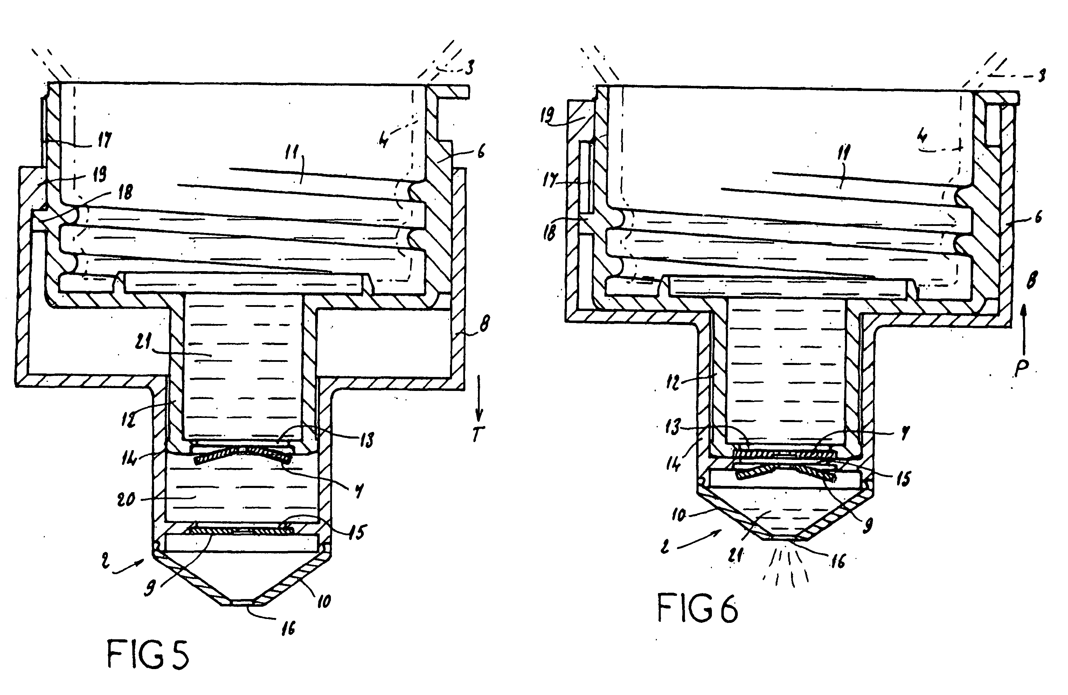

En faisant tourner la culasse 8 autour de la capsule 6, il est possible d'amener ces deux composants dans diverses positions angulaires relatives, indexées par l'engagement du bossage 19 dans l'une des gorges 17. En fonction de l'indexation retenue, le bossage 19 est engagé dans une gorge 17 de plus ou moins grande longueur, de sorte que la culasse 8 peut décrire une translation axiale plus ou moins iongue par rapport à la capsule 6, en restant concentrique à cette dernière. A titre d'exemple, la figure 4 illustre une position de réglage particulière, autorisant une course C relativement importante de la culasse 8 relativement à la capsule 6. Comme on le verra plus bas, le choix de la course C correspond à un ajustement du volume de liquide à doser.

Les figures 3 à 6 illustrent les phases successives de l'utilisation du doseur 2, qui sera maintenant décrite :

En position initiale (figure 3), le doseur 2 est vissé sur le goulot 4 du flacon 3. La culasse 8 est en position basse, par rapport à la culasse 6.

Ensuite, pour le réglage de la dose désirée, l'utilisateur tourne la culasse 8 autour de la capsule 6, un marquage (non représenté) pouvant être apposé sur la culasse 8 afin de repérer les positions de cette culasse correspondant aux différents volumes de liquide dosables. Le maintien de la culasse 8 dans la position angulaire correspondant au dosage souhaité est réalisé par l'indexation entre la culasse 8 et la capsule 6, au moyen du bossage 19 et de l'une des gorges 17, comme décrit précédemment. La figure 4 montre une position de réglage particulière, ainsi obtenue et indexée.

Bien entendu, si entre deux utilisations successives la dose désirée n'est pas modifiée, l'opération de réglage précédemment décrite devient superflue.

Dans la phase suivante (figure 5), qui est l'aspiration du liquide par le doseur 2, l'utilisateur retourne l'ensemble du flacon 3 muni du doseur 2, et il exerce manuellement une traction T sur la culasse 8 qui, ainsi, décrit une translation par rapport à la capsule 6. La traction exercée sur la culasse 8 crée une chambre cylindrique 20 entre la protubérance 14 de cette culasse 8, d'une part, et la protubérance correspondante 12 de la capsule 6, d'autre part. Ce mouvement crée simultanément une aspiration du liquide 21 contenu dans le flacon 3, de sorte que la membrane d'aspiration 7 se déforme et permet le passage du liquide 21, par l'ouverture 13, dans la chambre 20 formée comme il vient d'être indiqué.

Cette aspiration du liquide 21, remplissant la chambre 20, se poursuit sur toute la course de translation C de la culasse 8 par rapport à la capsule 6, c'est-à-dire jusqu'à la butée du bossage 19 de la culasse 8 à l'extrémité de la gorge 17 correspondante de la capsule 6. On comprend donc que le volume de liquide, finalement introduit dans la chambre 20, dépend directement de la course C de la culasse 8, donc de la position angulaire indexée de cette culasse 8.

Enfin, dans une phase d'évacuation du liquide (figure 6), l'utilisateur ramène la culasse 8 en position enfoncée sur la capsule 6, par une poussée manuelle P entraînant ladite culasse 8 dans un mouvement de translation inverse de celui de la phase précédente d'aspiration. Le volume de la chambre 20, précédemment formée, se réduit alors jusqu'à une valeur nulle. Le liquide 21, précédemment amené dans la chambre 20, est mis sous pression. La membrane d'aspiration 7 est alors appliquée contre le bord de l'ouverture 13, formée sur la protubérance 12 de la capsule 6, interdisant ainsi le retour du liquide 21 dans le flacon 3, tandis que la membrane d'évacuation 9 se déforme, permettant ainsi le passage du liquide 21 de la chambre 20 par l'ouverture 15 de la protubérance 14 de la culasse 8. Finalement, le liquide sort par l'orifice 16 de la tête de culasse 10, ce qui permet de verser la dose de liquide souhaitée, par exemple en la laissant couler dans une verre placé au-dessous du flacon 3.

La culasse 8 étant finalement ramenée dans sa position initiale, sur la capsule 6, le flacon 3 avec doseur 2 peut être remis dans sa position normale (non retournée), l'ensemble se trouvant alors prêt pour une nouvelle utilisation.

Le doseur 2, précédemment décrit, est applicable notamment au dosage de produits liquides dans le domaine médical et pharmaceutique.

L'on ne s'éloignerait pas du cadre de la présente invention, telle que définie dans les revendications annexées :
- en modifiant les détails de forme des différents composants du doseur;
- en réalisant ces composants en toutes matières appropriées ;
- en multipliant ou en réduisant le nombre de positions indexées de la culasse, correspondant à des doses de liquide distinctes, ou même en ne prévoyant aucune possibilité d'ajustage de la dose de liquide ;
- en prévoyant sur le doseur tous aménagements complémentaires, par exemple en équipant ce doseur de dispositions d'inviolabilité, à la manière d'un bouchon inviolable ;
- en destinant le doseur à des récipients de tous genres (flacons, bouteilles, bidons, etc...), en toutes matières ;
- en fixant ce doseur sur le récipient correspondant par tout moyen approprié ;
- en utilisant le même doseur dans tous domaines, et pour tous types de liquides.

## Revendications

1. Doseur pour liquide contenu dans un récipient, **caractérisé en ce qu'**il se compose d'une part, d'une capsule (6) s'adaptant sur le goulot (4) ou l'ouverture d'un récipient (3), la capsule (6) étant pourvue d'une ouverture (13) avec clapet d'aspiration du genre membrane (7), et d'autre part, d'une culasse (8) montée coulissante axialement autour de la capsule (6), de manière à décrire une course (C) prédéfinie ou présélectionnée, la culasse (8) coiffant la capsule (6) et étant pourvue d'une ouverture (15) avec clapet d'évacuation du genre membrane (9), une chambre de dosage (20) de volume modifiable, communiquant par le clapet d'aspiration (7) avec l'intérieur du récipient (3), et par le clapet d'évacuation (9) avec l'extérieur, étant ainsi formée entre une partie (12) de la capsule (6) et une partie (14) de la culasse (8), de manière à permettre, par un retournement du récipient (3) et un déplacement alternatif de la culasse (8), d'isoler puis de verser une dose de liquide (21), correspondant à la variation de volume de la chambre de dosage (20) engendrée par la course (C) de la culasse (8).

2. Doseur selon la revendication 1, **caractérisé en ce que** la capsule (6) possède un corps cylindrique adaptable sur le goulot (4) ou l'ouverture du récipient (3), et une protubérance (12) avec une ouverture supérieure (13) munie du clapet d'aspiration du genre membrane (7), tandis que la culasse (8) possède un corps cylindrique monté de façon coaxiale autour du corps de la capsule (6), avec possibilité de coulissement, et une protubérance (14) avec ouverture supérieure (15) munie du clapet d'évacuation du genre membrane (9), la chambre de dosage (20) étant formée entre la protubérance (12) de la capsule (6) et la protubérance (14) de la culasse (8).

3. Doseur selon la revendication 2, **caractérisé en ce que** le corps cylindrique de la capsule (6) est muni intérieurement d'un taraudage (11), prévu pour être vissé sur un filetage extérieur (5) du goulot (4) d'un récipient (3).

4. Doseur selon la revendication 2 ou 3, **caractérisé en ce que** la protubérance (14) de la culasse (8) reçoit une tête de culasse (10) qui surmonte le clapet d'évacuation du genre membrane (9), et qui forme un orifice de sortie (16) pour le liquide dosé (21).

5. Doseur selon l'une quelconque des revendications 1 à 4, **caractérisé en ce que** les clapets d'aspiration et d'évacuation sont constitués par des membranes (7, 9) en forme de disque souple, fixées chacune par leur centre dans l'ouverture (13, 15) correspondante de la capsule (6) ou de la culasse (8).

6. Doseur selon l'une quelconque des revendications 1 à 5, **caractérisé en ce qu'**il comprend des moyens (17, 18, 19) de sélection et de limitation de la course de translation (C) de la culasse (8) relativement à la capsule (6), de manière à ajuster la variation de volume de la chambre de dosage (20) et à réaliser ainsi un réglage de la dose de liquide (21) distribuée à chaque utilisation du doseur (2).

7. Doseur selon l'ensemble des revendications 2 et 6, **caractérisé en ce que** lesdits moyens de sélection et limitation de la course de translation (C) de la culasse (8) relativement à la capsule (6) comprennent, en combinaison :
- un montage non seulement coulissant, mais aussi rotatif, de la culasse (8) autour de la capsule (6),
- une série de gorges (17), orientées axialement, réparties sur la périphérie du corps de la capsule (6), les gorges (17) possédant toutes des longueurs distinctes, par exemple croissantes, et
- un bossage (19) formé sur le corps de la culasse (8) et prévu pour coopérer avec l'une quelconque des gorges (17) de la capsule,
la rotation de la culasse (8) permettant d'amener celle-ci dans une position angulaire indexée sélectionnable, son bossage (19) étant engagé dans une gorge (17) de longueur choisie, limitant la course de translation (C) de la culasse en correspondance avec la dose de liquide souhaitée.

8. Doseur selon la revendication 7, **caractérisé en ce que** la culasse (8) comporte un marquage pour repérer les positions angulaires sélectionnables de cette culasse (8) correspondant aux différents volumes de liquide dosables.

## Patentansprüche

1. Dosiervorrichtung für Flüssigkeit in einem Behälter, **dadurch gekennzeichnet, dass** sie zusammengesetzt ist einerseits aus einer Kapsel (6), die auf den Flaschenhals (4) oder die Öffnung eines Behälters (3) passt, wobei die Kapsel (6) mit einer Öffnung (13) mit einer Ansaugklappe (7) des Membran-Typs versehen ist, und andererseits aus einem Kopf (8), der axial gleitend um die Kapsel (6) herum so montiert ist, dass er einen vorher bestimmten oder vorher gewählten Hub (C) beschreibt, wobei der Kopf (8) die Kapsel (6) bedeckt und mit einer Öffnung (15) mit einer Auslassklappe (9) des Membran-Typs versehen ist, aus einer Dosierkammer (20) mit veränderbarem Volumen, die über die Ansaugklappe (7) nach innen in den Behälter (3) und mit der Auslassklappe (9) nach außen kommuniziert, und derart zwischen einem Bereich (12) der Kapsel (6) und einem Bereich (14) des Kopfes (8) gebildet ist, dass durch Umdrehen des Behälters (3) und Hin- und Herschieben des Kopfes (8) eine Dosis einer Flüssigkeit (21) abgetrennt und dann ausgegeben werden kann, die der Änderung des Volumens der Dosierkammer (20) entspricht, die vom Hub (C) des Kopfes (8) erzeugt wird.

2. Dosiervorrichtung nach Anspruch 1, **dadurch gekennzeichnet, dass** die Kapsel (6) einen zylinderförmigen Körper hat, der an den Flaschenhals (4) oder die Öffnung des Behälters (3) angepasst werden kann, sowie eine Ausstülpung (12) mit einer oberen Öffnung (13) hat, die mit der Ansaugklappe (7) des Membran-Typs ausgestattet ist, während der Kopf (8) einen zylinderförmigen Körper hat, der koaxial um den Körper der Kapsel (6) herum gleitfähig montiert ist, sowie eine Ausstülpung (14) mit einer oberen Öffnung (15), dis mit der Auslassklappe (9) des Membran-Typs ausgestattet ist, wobei die Dosierkammer (20) zwischen der Ausstülpung (12) der Kapsel (6) und der Ausstülpung (14) des Kopfes (8) gebildet ist.

3. Dosiervorrichtung nach Anspruch 2, **dadurch gekennzeichnet, dass** der zylinderförmige Körper der Kapsel (6) innen mit einem Gewinde (11) versehen ist, das vorgesehen ist, um auf ein äußeres Gewinde (5) des Flaschenhalses (4) eines Behälters (3) geschraubt zu werden.

4. Dosiervorrichtung nach Anspruch 2 oder 3, **dadurch gekennzeichnet, dass** die Ausstülpung (14) des Kopfes (8) einen Auslasskegel (10) hat, der die Auslassklappe (9) des Membran-Typs überdeckt und der eine Ausgangsöffnung (16) für die dosierte Flüssigkeit (21) aufweist.

5. Dosiervorrichtung nach einem der Ansprüche 1 bis 4, **dadurch gekennzeichnet, dass** die Ansaug- und die Auslassklappe aus Membranen (7, 9) in Form von biegsamen Scheiben bestehen, die jeweils in ihrer Mitte in der entsprechenden Öffnung (13,15) der Kapsel (6) oder des Kopfes (8) befestigt sind.

6. Dosiervorrichtung nach einem der Ansprüche 1 bis 5, **dadurch gekennzeichnet, dass** sie Mittel (17, 18, 19) für die Auswahl und die Begrenzung des Hubs (C) des Kopfes (8), bezogen auf die Kapsel (6) hat, und zwar so, dass die Volumenänderung der Dosierkammer (20) eingestellt wird und so eine Regulierung der Dosis der Flüssigkeit (21) erreicht wird, die bei jeder Verwendung der Dosiervorrichtung (2) ausgegeben wird.

7. Dosiervorrichtung nach der Gesamtheit der Ansprüche 2 bis 6, **dadurch gekennzeichnet, dass** diese Mittel für die Auswahl und die Begrenzung des Hubs (C) des Kopfes (8), bezogen auf die Kapsel (6), in Kombination umfassen:
- eine nicht nur gleitende, sondern auch drehende Montage des Kopfes (8) um die Kapsel (6),
- eine Reihe von Nuten (17), die axial ausgerichtet und auf der Peripherie des Körpers der Kapsel (6) verteilt sind, wobei alle unterschiedliche, beispielsweise wachsende Längen haben, und
- einen Vorsprung (19), der auf dem Körper des Kopfes (8) gebildet ist und dazu dient, mit einer beliebigen der Nuten (17) der Kapsel zusammenzuwirken,
wobei durch Drehen des Kopfes (8) diese in eine wählbare indizierte Winkelposition gebracht werden kann und wobei ihr Vorsprung (19) in eine Nut (17) der gewählten Länge einrastet und so den Hub (C) des Kopfes in Übereinstimmung mit der gewünschten Flüssigkeitsdosis begrenzt.

8. Dosiervorrichtung nach Anspruch 7, **dadurch gekennzeichnet, dass** der Kopf (8) eine Markierung hat, um die wählbaren Winkelpositionen dieses Kopfes (8) entsprechend den verschiedenen dosierbaren Flüssigkeitsvolumina zu bezeichnen.

## Claims

1. Dosing apparatus for liquid contained in a vessel, **characterized in that** it is made up, on the one hand, of a cap (6) that fits onto the neck (4) or the opening of a vessel (3), the cap (6) being provided with an opening (13) with intake valve of the diaphragm type (7) and, on the other hand, of a breech block (8) mounted to slide axially around the cap (6) so as to describe a predefined or preselected travel (C), the breech block (8) covering the cap (6) and being provided with an opening (15) with a discharge valve of the diaphragm type (9), a metering chamber (20), of variable volume, communicating via the intake valve (7) with the inside of the vessel (3) and via the discharge valve (9) with the outside, thus being formed between a part (12) of the cap (6) and a part (14) of the breech block (8) so as to make it possible, by inverting the vessel (3) and moving the breech block (8) back and forth, to isolate then pour out a dose of liquid (21) corresponding to the variation in volume of the metering chamber (20) that is brought about by the travel (C) of the breech block (8).

2. Dosing apparatus according to Claim 1, **characterized in that** the cap (6) has a cylindrical body that can be fitted onto the neck (4) or the opening of the vessel (3), and a protrusion (12) with a top opening (13) equipped with an intake valve of the diaphragm type (7), whereas the breech block (8) has a cylindrical body mounted coaxially around the body of the cap (6), with the possibility of sliding, and a protrusion (14) with a top opening (15) equipped with the discharge valve of the diaphragm type (9), the metering chamber (20) being formed between the protrusion (12) of the cap (6) and the protrusion (14) of the breech block (8).

3. Dosing apparatus according to Claim 2, **characterized in that** the cylindrical body of the cap (6) is internally equipped with a tapping (11) designed to be screwed onto an external screw thread (5) of the neck (4) of a vessel (3).

4. Dosing apparatus according to Claim 2 or 3, **characterized in that** the protrusion (14) of the breech block (8) accepts a breech block head (10) which surmounts the discharge valve of the diaphragm type (9) and forms an outlet orifice (16) for the metered liquid (21).

5. Dosing apparatus according to any one of Claims 1 to 4, **characterized in that** the intake and discharge valves consist of diaphragms (7, 9) in the form of flexible discs, each one fixed via its centre into the corresponding opening (13, 15) in the cap (6) or in the breech block (8).

6. Dosing apparatus according to any one of Claims 1 to 5, **characterized in that** it comprises means (17, 18, 19) for selecting and limiting the translational travel (C) of the breech block (8) relative to the cap (6) so as to tailor the variation in volume of the metering chamber (20) and thus regulate the dose of liquid (21) dispensed each time the dosing apparatus (2) is used.

7. Dosing apparatus according to the combination of Claims 2 and 6, **characterized in that** the said means for selecting and limiting the translational travel (C) of the breech block (8) relative to the cap (6) comprise, in combination:
- a mounting of the breech block (8) around the cap (6) so that not only can it slide, but it may also rotate,
- a series of axially directed grooves (17) distributed over the periphery of the body of the cap (6), the grooves (17) all having distinct, for example increasing, lengths, and
- a boss (19) formed on the body of the breech block (8) and designed to collaborate with any one of the grooves (17) of the cap,
the rotating of the breech block (8) allowing this breech block to be brought into a selectable indexed angular position, its boss (19) being engaged in a groove (17) of chosen length, limiting the translational travel (C) of the breech block to correspond to the desired dose of liquid.

8. Dosing apparatus according to Claim 7, **characterized in that** the breech block (8) has markings to identify the selectable angular positions of this breech block (8) that correspond to the various meterable volumes of liquid.
